# EUROPEAN PATENT APPLICATION

(11) **EP 4 803 288 A1**
(43) Date of publication of application: **09.09.2026**
(21) Application number: 24885761.7
(22) Date of filing: 30.10.2024
(51) Int. Cl.: B29C 65/20

(54) **WELDING DEVICE**

(30) Priority: 02.11.2023 JP 2023188609
(71) Applicant: IHI Corporation, Koto-ku Tokyo 135-8710 (JP); IHI Aerospace Co., Ltd., Tomioka-shi, Gunma 370-2398 (JP)
(72) Inventor: KAMBE, Takashi, Tokyo 135-8710 (JP); SAKAMOTO, Hideyuki, Tokyo 135-8710 (JP); HOSAKA, Fumihiko, Tokyo 135-8710 (JP); SEO, Satoshi, Tokyo 135-8710 (JP); MASAKI, Kunitaka, Tokyo 135-8710 (JP); SHIRAKAWA, Mai, Tokyo 135-8710 (JP); AKIMOTO, Toyoharu, Tomioka-shi, Gunma 370-2398 (JP); TANAKA, Shinichi, Tomioka-shi, Gunma 370-2398 (JP); SAITO TSUTSUI, Fuki, Tomioka-shi, Gunma 370-2398 (JP); UCHIKAWA, Shouta, Tomioka-shi, Gunma 370-2398 (JP)
(74) Representative: MERH-IP Matias Erny Reichl Hoffmann Patentanwälte PartG mbB
(86) International application number: PCT/JP2024/038693
(87) International publication number: WO 2025/094994

(57) **Abstract**

A welding device 1 includes: a heating element 14 made of a fiber-reinforced resin in which fibers are arranged in one direction, the heating element 14 disposed between a first workpiece 10 and a second workpiece 12; a plurality of systems of electrodes 20 attached to the heating element 14, the plurality of systems of electrodes 20 dividing an energized region of the heating element 14 in a direction intersecting an extending direction of the fibers; a power supply device 22 that applies current in the extending direction in the heating element 14 by applying a voltage to the electrodes 20; and a pressurizing device 24 that welds the first workpiece 10 and the second workpiece 12 via the heating element 14 by applying a pressure to at least one of the first workpiece 10 or the second workpiece 12 in a direction in which the first workpiece 10 and the second workpiece 12 approach each other in a state where the heating element 14 has generated heat with the current flowing through the heating element 14.

## Description

### Technical Field

The present disclosure relates to a welding device. The present application claims the benefit of priority based on Japanese Patent Application No. 2023-188609 filed on November 2, 2023, the content of which is incorporated herein.

### Background Art

For example, Patent Literature 1 discloses technology for welding a first composite material and a second composite material. In Patent Literature 1, a first protective sheet is disposed to be in contact with a first composite material, a second protective sheet is disposed to be in contact with a second composite material, and an energized sheet is disposed between the first protective sheet and the second protective sheet. In Patent Literature 1, a voltage is applied to an electrode of the energized sheet, and the first composite material and the second composite material are welded via the first protective sheet, the second protective sheet, and the energized sheet.

### Citation List

### Patent Literature

Patent Literature 1: WO 2022/044254 A

### Summary

### Technical Problem

For example, in an energized sheet to which a voltage is applied, the distribution of resistance values may be partially non-uniform. In such a case, the temperature distribution in the energized sheet when the voltage is applied to the energized sheet is not uniform, and as a result, the quality of welding may be deteriorated.

The object of the present disclosure is to provide a welding device capable of suppressing deterioration in the quality of welding.

### Solution to Problem

In order to solve the above problem, a welding device according to an aspect of the present disclosure includes: a heating element made of a fiber-reinforced resin in which fibers are arranged in one direction, the heating element disposed between a first workpiece and a second workpiece; a plurality of systems of electrodes attached to the heating element, the plurality of systems of electrodes dividing an energized region of the heating element in a direction intersecting an extending direction of the fibers; a power supply device that applies current in the extending direction in the heating element by applying a voltage to the electrodes; and a pressurizing device that welds the first workpiece and the second workpiece via the heating element by applying a pressure to at least one of the first workpiece or the second workpiece in a direction in which the first workpiece and the second workpiece approach each other in a state where the heating element has generated heat with the current flowing through the heating element.

In addition, electrodes of adjacent systems among the plurality of systems of electrodes may be insulated from each other by an insulator.

In addition, a conduction support material that supports electrical conduction between an electrode and the heating element may be applied to a position where the electrode is attached in the heating element.

In addition, an electrode may be attached to the heating element in a state where at least a part of the resin included in the fiber-reinforced resin is removed at a position where the electrode is attached in the heating element.

In addition, a control device that controls the power supply device and the pressurizing device may be further included, and the control device may cause the power supply device to individually apply a voltage to electrodes of each of the systems such that a temperature of the energized region in the heating element is substantially uniform in a plurality of the energized regions.

In order to solve the above problem, a welding device according to an aspect of the present disclosure includes: a plurality of heating elements arranged apart from each other between a first workpiece and a second workpiece; electrodes individually attached to the plurality of heating elements; a power supply device that applies current to the heating elements by applying a voltage to the electrodes; and a pressurizing device that welds the first workpiece and the second workpiece via the heating elements by applying a pressure to at least one of the first workpiece or the second workpiece in a direction in which the first workpiece and the second workpiece approach each other in a state where the heating elements have generated heat with the current flowing through the heating elements.

In addition, adjacent heating elements among the plurality of heating elements may be insulated from each other by an insulator.

In addition, a control device that controls the power supply device and the pressurizing device may be further included, and the control device may cause the power supply device to individually apply a voltage to electrodes of each of the heating elements such that temperatures of a plurality of heating elements are substantially uniform.

### Advantageous Effects of Invention

According to the present disclosure, it is possible to suppress deterioration in quality of welding.

### Brief Description of Drawings

Fig. 1 is a schematic diagram illustrating an example of the configuration of a welding device according to a first embodiment.
Fig. 2 is a plan view for explaining current flowing through a heating element in the first embodiment.
Fig. 3 is a flowchart for explaining the flow of welding using the welding device of the first embodiment.
Fig. 4 is a graph illustrating an example of transition of the temperature of a heating element when welding is performed by the welding device according to the first embodiment.
Fig. 5 is a graph illustrating an example of transition of the voltage applied to an electrode in the welding device of the first embodiment.
Fig. 6 is a schematic diagram illustrating an example of the configuration of a welding device according to a second embodiment.
Fig. 7 is a plan view for explaining current flowing through a heating element in the second embodiment.

### Description of Embodiments

Embodiments of the present disclosure will be described in detail below with reference to the accompanying drawings. Dimensions, materials, other specific numerical values, and the like illustrated in such embodiments are merely examples for facilitating understanding, and the present disclosure is not limited thereby except for a case where it is specifically mentioned. Note that, in the present specification and the drawings, components having substantially the same function and structure are denoted by the same symbol, and redundant explanations are omitted. Illustration of components not directly related to the present disclosure is omitted.

### First Embodiment

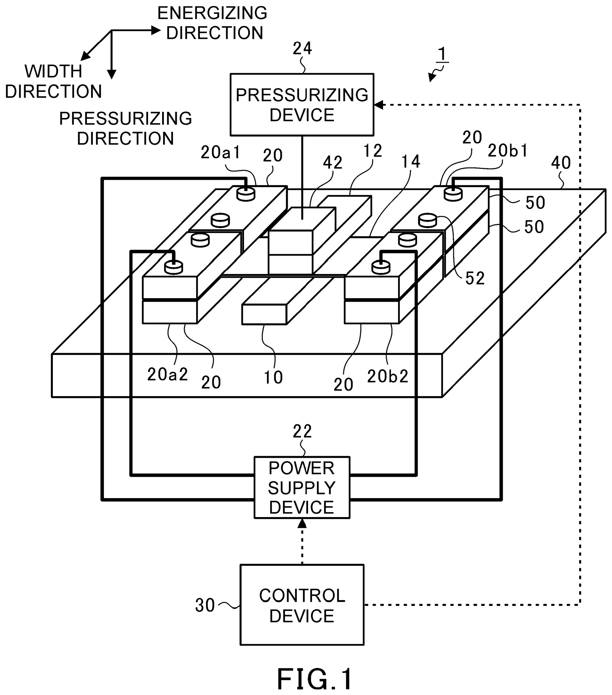

Fig. 1 is a schematic diagram illustrating an example of the configuration of a welding device 1 according to a first embodiment. The welding device 1 of the first embodiment includes a first workpiece 10, a second workpiece 12, a heating element 14, a first positive electrode 20a1, a first negative electrode 20b1, a second positive electrode 20a2, a second negative electrode 20b2, a power supply device 22, a pressurizing device 24, and a control device 30.

The first workpiece 10 and the second workpiece 12 are members welded to each other by the welding device 1. The first workpiece 10 and the second workpiece 12 are made of, for example, a fiber-reinforced resin such as a carbon fiber-reinforced resin (CFRP). Incidentally, the first workpiece 10 and the second workpiece 12 are not limited to the fiber-reinforced resin, and may be made of any material such as a thermoplastic resin. In addition, the material of the first workpiece 10 and the material of the second workpiece 12 may be the same or different.

The first workpiece 10 and the second workpiece 12 may be, for example, flat plates or angle plates whose surfaces to be welded have planar shapes. In addition, the first workpiece 10 and the second workpiece 12 may be curved plates or the like in which surfaces to be welded are curved. The first workpiece 10 and the second workpiece 12 are not limited to members having the exemplary shapes, and may be members having any shapes having at least surfaces to be welded.

The heating element 14 is made of, for example, a fiber-reinforced resin such as a carbon fiber-reinforced resin (CFRP). More specifically, the heating element 14 is made of a fiber-reinforced resin in which fibers are arranged in one direction. For example, the heating element 14 may be made of a carbon fiber-reinforced resin prepreg in which carbon fibers are arranged in one direction. Hereinafter, the direction in which the fibers included in the heating element 14 extend may be referred to as an extending direction of the fibers or an extending direction of the heating element 14.

In the heating element 14, the electrical resistance in the extending direction of the fibers is lower than the electrical resistance in a direction intersecting the extending direction of the fibers. Therefore, in the heating element 14, when a voltage is applied, current is likely to flow in the extending direction of the fibers. On the other hand, in the heating element 14, current is unlikely to flow in a direction intersecting the extending direction of the fibers. That is, in the heating element 14 including the fiber-reinforced resin in which fibers are arranged in one direction, there is anisotropy in the direction in which the current flows.

Hereinafter, applying current may be referred to as energization. Incidentally, the direction in which the current flows in the heating element 14 may be referred to as an energizing direction. In a case where the heating element 14 is made of a fiber-reinforced resin in which fibers are arranged in one direction, the energizing direction is substantially the same as the extending direction of the fibers. The heating element 14 generates heat when current flows therein. That is, the temperature of the heating element 14 is higher in an energized state than in a non-energized state. When the temperature of the heating element 14 is higher than or equal to a predetermined temperature, the resin on the surface of the heating element 14 is softened.

The heating element 14 is formed in a sheet shape. The length of the heating element 14 in the extending direction is longer than regions to be welded in the first workpiece 10 and the second workpiece 12.

The first workpiece 10 and the second workpiece 12 are arranged to face each other. For example, the first workpiece 10 is disposed on a workbench 40. The second workpiece 12 is disposed on the opposite side of the workbench 40 with respect to the first workpiece 10.

The heating element 14 is disposed between the first workpiece 10 and the second workpiece 12. In this state, both ends of the heating element 14 in the extending direction of the fibers are outside the first workpiece 10 and the second workpiece 12. A first surface of the two surfaces of the heating element 14 is in contact with a surface of the first workpiece 10 to be welded. A second surface of the two surfaces of the heating element 14 is in contact with a surface of the second workpiece 12 to be welded.

As described above, of the first workpiece 10 and the second workpiece 12, the second workpiece 12 is disposed on the opposite side to the workbench 40 with respect to the heating element 14. A pressurizing jig 42 is disposed on the surface of the second workpiece 12 that is on the opposite side to the surface on which the heating element 14 abuts.

The pressurizing jig 42 is formed in, for example, a block shape having a surface that abuts on the second workpiece 12. The shape of the pressurizing jig 42 is not limited to the illustrated shape, and may be any shape.

The pressurizing device 24 is connected to the pressurizing jig 42. The pressurizing device 24 is capable of moving the pressurizing jig 42 in a direction of approaching the workbench 40 using a drive source such as hydraulic pressure.

That is, the pressurizing device 24 is capable of applying pressure, via the pressurizing jig 42, to at least one of the first workpiece 10 or the second workpiece 12 in a direction in which the first workpiece 10 and the second workpiece 12 approach each other. For example, in an aspect in which the pressurizing jig 42 abuts against the second workpiece 12, the pressurizing device 24 is capable of applying pressure to the second workpiece 12 via the pressurizing jig 42.

Hereinafter, the direction in which the pressure is applied, namely, the direction of pressurization, may be referred to as a pressurizing direction. The pressurizing direction approximately corresponds to a direction intersecting the surface of the heating element 14, namely, the thickness direction of the heating element 14. In addition, a direction intersecting the energizing direction (in other words, the extending direction of the fibers) of the heating element 14 and the pressurizing direction by the pressurizing device 24 may be referred to as the width direction of the heating element 14.

Of the first workpiece 10 and the second workpiece 12, the first workpiece 10 may be disposed on the opposite side to the workbench 40 with respect to the heating element 14. In this aspect, the pressurizing jig 42 is disposed on the surface of the first workpiece 10 that is on the opposite side to the surface on which the heating element 14 abuts. In this aspect, the pressurizing device 24 may be configured to be capable of applying pressure to the first workpiece 10 via the pressurizing jig 42.

Furthermore, the workbench 40 may be omitted, the pressurizing jig 42 may be disposed on both the first workpiece 10 and the second workpiece 12, and the pressurizing device 24 may apply pressure to both the first workpiece 10 and the second workpiece 12.

The pressurizing device 24 pressurizes the first workpiece 10 and the second workpiece 12 in a state where the heating element 14 generates heat with the current flowing through the heating element 14. As a result, the heating element 14 is welded to the first workpiece 10 and to the second workpiece 12. As a result, the first workpiece 10 and the second workpiece 12 are welded via the heating element 14. That is, resistance welding is performed in the welding device 1.

The heating element 14 is energized by the first positive electrode 20a1, the first negative electrode 20b1, the second positive electrode 20a2, the second negative electrode 20b2, and the power supply device 22.

Hereinafter, the first positive electrode 20a1, the first negative electrode 20b1, the second positive electrode 20a2, and the second negative electrode 20b2 may be collectively referred to simply as the electrodes 20. In addition, the first positive electrode 20a1 and the first negative electrode 20b1 may be collectively referred to simply as the first electrodes. In addition, the second positive electrode 20a2 and the second negative electrode 20b2 may be collectively referred to simply as the second electrodes.

Each of the electrodes 20 is disposed on, for example, the workbench 40. The electrodes 20 are made of, for example, a conductive metal material. The electrodes 20 are attached to both ends of the heating element 14 in the extending direction of the fibers. A plurality of systems of the electrodes 20 is provided in the width direction of the heating element 14 for one heating element 14. Note that a system herein means one group forming one closed circuit. Therefore, the plurality of systems means that the electrodes are divided into a plurality of groups and that there is a plurality of pairs of electrodes each forming one closed circuit.

More specifically, the first positive electrode 20a1 is attached to a first end of the heating element 14. The first negative electrode 20b1 is attached to a second end of the heating element 14. The first positive electrode 20a1 and the first negative electrode 20b1 are attached closer to a first side in the width direction of the heating element 14. The first positive electrode 20a1 and the first negative electrode 20b1 belong to one system.

The second positive electrode 20a2 is attached to the first end of the heating element 14. The second negative electrode 20b2 is attached to the second end of the heating element 14. The second positive electrode 20a2 and the second negative electrode 20b2 are attached closer to a second side in the width direction of the heating element 14. The second positive electrode 20a2 and the second negative electrode 20b2 belong to one system different from that of the first positive electrode 20a1 and the first negative electrode 20b1.

Each of the electrodes 20 includes two electrode segments 50 and an electrode fixing member 52. The two electrode segments 50 are arranged to face each other, and for example, facing surfaces are flat. An end of the heating element 14 is disposed between two electrode segments 50. An electrode fixing member 52 fixes two electrode segments 50 to the workbench 40 in a state where an end of the heating element 14 is disposed between the two electrode segments 50. The end of the heating element 14 is clamped by the two electrode segments 50.

The power supply device 22 is electrically connected to each of the electrodes 20. The power supply device 22 is capable of applying a voltage to the electrodes 20. The power supply device 22 can apply current in the extending direction of the fibers in the heating element 14 by applying a voltage to the electrodes 20.

More specifically, the power supply device 22 applies a first voltage between the first positive electrode and the first negative electrode. On the other hand, the power supply device 22 applies a second voltage independent of the first voltage between the second positive electrode and the second negative electrode. That is, the power supply device 22 can apply independent voltages to a plurality of independent systems. Note that the power supply device 22 applies, for example, a DC voltage to the electrodes 20; however, without being limited to a DC voltage, the power supply device 22 may apply an AC voltage or a pulsed voltage to the electrodes 20.

The control device 30 includes one or more processors and one or more memories connected to the processors. The memories include a ROM in which a program and the like are stored and a RAM as a work area. The processor controls the entire welding device 1 in cooperation with a program included in the memories. For example, the control device 30 controls the power supply device 22 and the pressurizing device 24. The control device 30 will be described in detail later.

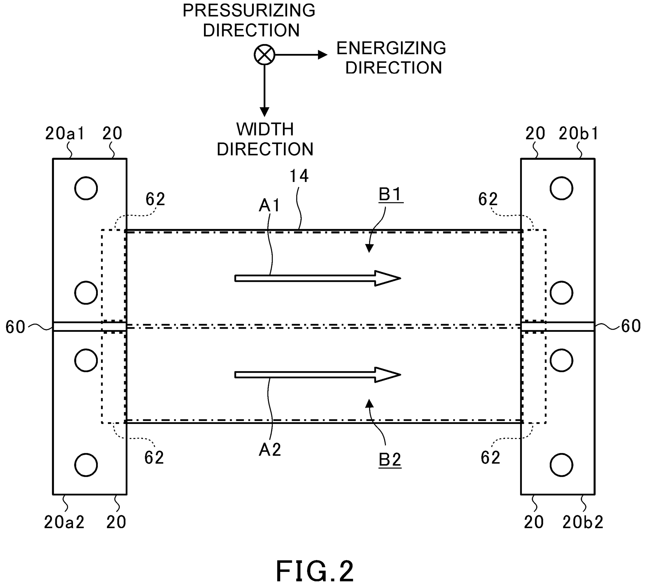

Fig. 2 is a plan view for explaining current flowing through the heating element 14 in the first embodiment. A hollow arrow A1 and a hollow arrow A2 in Fig. 2 each indicate a direction in which current flows.

As illustrated in Fig. 2, the first positive electrode 20a1 and the first negative electrode 20b1 are located in the upper side above the center of the heating element 14 in the width direction in Fig. 2.

When the first voltage is applied between the first positive electrode 20a1 and the first negative electrode 20b1, current flows in an upper region above the center of the heating element 14 in the width direction in Fig. 2 as indicated by the hollow arrow A1 depending on the positions of the first positive electrode 20a1 and the first negative electrode 20b1. Hereinafter, a region in the heating element 14 through which current flows in response to the first voltage of the first electrodes may be referred to as a first energized region. In Fig. 2, the first energized region is exemplified by a region B1 surrounded by an alternate long and short dash line. The value of the current flowing through the first energized region can be a value corresponding to the first voltage.

As illustrated in Fig. 2, the second positive electrode 20a2 and the second negative electrode 20b2 are located on the lower side below the center of the heating element 14 in the width direction in Fig. 2.

When the second voltage is applied between the second positive electrode 20a2 and the second negative electrode 20b2, current flows in a lower region below the center of the heating element 14 in the width direction in Fig. 2 as indicated by the hollow arrow A2 depending on the positions of the second positive electrode 20a2 and the second negative electrode 20b2. Hereinafter, a region in the heating element 14 through which current flows in response to the second voltage of the second electrodes may be referred to as a second energized region. In Fig. 2, the second energized region is exemplified by a region B2 surrounded by an alternate long and short dash line. The value of the current flowing through the second energized region can be a value corresponding to the second voltage.

As described above, in the welding device 1, the energized region of the heating element 14 through which the current flows is divided in the width direction of the heating element 14. In the example of Fig. 2, the energized region is divided into two parts of the first energized region and the second energized region in the width direction of the heating element 14.

As a result, in the welding device 1, the temperature distribution in the heating element 14 can be controlled by the first voltage and the second voltage, and the amount of heat generation can be controlled for each of the energized regions. As a result, in the welding device 1, the temperature distribution in the heating element 14 can be finely controlled, and for example, the temperature distribution in the heating element 14 can be made substantially uniform.

Note that an example has been described here in which two systems of electrodes 20 are provided and the energized region is divided into two. However, it is not limited to the aspect in which two systems of electrodes 20 are provided, and any number of systems of three or more systems of electrodes may be provided. In this case, the energized region is divided into the number of systems of electrodes 20. In this aspect, the temperature distribution in the heating element 14 can be more finely controlled as the number of divisions of the energized region increases.

In addition, in Fig. 2, the first electrodes and the second electrodes are attached to the heating element 14 substantially uniformly in the width direction of the heating element 14 such that the energized region is substantially uniform in the width direction of the heating element 14. However, the first electrodes and the second electrodes may be attached to the heating element 14 at any ratio in the width direction of the heating element 14. In this case, the energized region is divided so as to have an area ratio corresponding to the ratio of the attachment positions of the first electrodes and the second electrodes. In this aspect, the temperature distribution in the heating element 14 can be more finely controlled.

As illustrated in Fig. 2, an insulating member 60 which is a sheet-like insulator having an insulating property is disposed between the first positive electrode 20a1 and the second positive electrode 20a2 and between the first negative electrode 20b1 and the second negative electrode 20b2. That is, among the plurality of systems of electrodes 20, electrodes 20 of adjacent systems are insulated from each other by an insulator.

As a result, in the welding device 1, it is possible to prevent electrical short circuit between the first electrodes and the second electrodes, namely, between electrodes 20 of adjacent systems. As a result, in the welding device 1, the energized region can be divided more appropriately.

In addition, a conduction support material 62 that supports electrical conduction between an electrode 20 and the heating element 14 is applied to a position where the electrode 20 is attached to the heating element 14. The conduction support material 62 is, for example, silver paste or plating. The heating element 14 is attached to the electrodes 20 after the conduction support material 62 is applied to the ends.

As a result, in the welding device 1, the conduction between the electrodes 20 and the heating element 14 is improved, and thus a current corresponding to a voltage applied to electrodes 20 can be more reliably caused to flow in the heating element 14.

In place of the aspect in which the conduction support material 62 is applied to the heating element 14, at least a part of a resin included in the fiber-reinforced resin may be removed at the positions where the electrodes 20 are attached in the heating element 14. For example, at least a part of the fiber-reinforced resin may be removed by being scraped with a file or the like. Furthermore, the electrodes 20 may be attached to the ends of the heating element 14 in a state where at least a part of the resin included in the fiber-reinforced resin is removed.

Also in this aspect, the conduction between the electrodes 20 and the heating element 14 is improved, and thus a current corresponding to a voltage applied to the electrodes 20 can be more reliably caused to flow in the heating element 14.

In addition, the conduction support material 62 may be applied after at least a part of the resin included in the fiber-reinforced resin is removed at the positions where the electrodes 20 are attached in the heating element 14. Furthermore, the electrodes 20 may be attached to the ends of the heating element 14 in a state where at least a part of the resin included in the fiber-reinforced resin is removed and where the conduction support material 62 is applied.

Also in this aspect, the conduction between the electrodes 20 and the heating element 14 is improved, and thus a current corresponding to a voltage applied to the electrodes 20 can be more reliably caused to flow in the heating element 14.

In Fig. 2, the energized region is divided into two in the width direction of the heating element 14. However, three or more divided energized regions may be formed in the heating element 14. That is, by providing three or more systems of electrodes 20 in the width direction of the heating element 14, the energized region of the heating element 14 may be divided into three or more systems, the number of which is the same as the number of systems of electrodes 20.

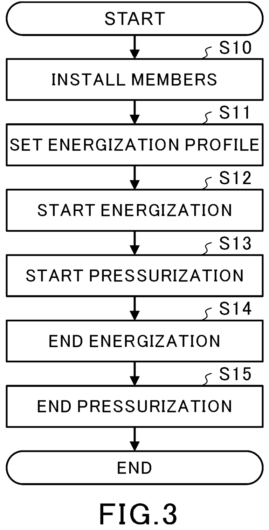

Fig. 3 is a flowchart illustrating the flow of welding using the welding device 1 of the first embodiment. In order to perform welding, first, members are installed (S10). For example, the first workpiece 10, the second workpiece 12, and the heating element 14 are arranged. The electrodes 20 are attached to the ends of the heating element 14. The pressurizing jig 42 is connected to the pressurizing device 24 and disposed on the upper surface of the second workpiece 12. The electrodes 20 are electrically connected to the power supply device 22. The installation of the members may be performed by a worker or may be performed by a machine or a device such as an industrial robot.

Next, in the control device 30, an energization profile is set (S11). The energization profile includes, for example, the value of a voltage to be applied to electrodes 20 of each system, timing to start applying the voltage, and timing to finish applying the voltage. The energization profile may include the value of current to be applied to the electrodes 20, timing to start applying the current, and timing to end applying the current.

For example, in the setting of the energization profile, the value of the voltage and others are set depending on parameters related to the workpieces such as the materials, shapes, and welded areas of the first workpiece 10 and the second workpiece 12, and parameters related to the heating element 14 such as the material, resistance value, and welded area of the heating element 14.

In addition, the energization profile may include the value of pressurization by the pressurizing device 24, timing to start pressurization, and timing to end pressurization.

For example, in the welding device 1, the pressurization by the pressurizing device 24 is performed in a state where the temperature of the heating element 14 is within a target temperature range. The target temperature range indicates a temperature range of the heating element 14 in which welding can be appropriately performed. Therefore, in the welding device 1, the time elapsed from an energization start time point to reaching the target temperature range is confirmed in advance by an experiment or simulation for each combination of various parameters, and the pressurization start time point based on the energization start time point is specified.

The upper limit value of the target temperature range may be set to, for example, the degradation temperature of the resin of the heating element 14. The lower limit value of the target temperature range only needs to be a lower limit temperature at which welding can be appropriately performed, and may be set to, for example, the melting point of the resin of the heating element 14, the glass transition temperature of the resin of the heating element 14, or a temperature lower than the glass transition temperature of the resin of the heating element 14 by a predetermined temperature. In addition, pressurization may be started before the temperature reaches the target temperature range. For example, the lower limit value of the target temperature range may be set to the glass transition temperature of the resin of the heating element 14, and pressurization may be started in a state where the temperature of the resin of the heating element 14 is lower than or equal to the glass transition temperature. By pressurizing the heating element 14 in a state where the temperature of the resin of the heating element 14 is lower than or equal to the glass transition temperature, welding is started before the characteristics of the resin of the heating element change, which can suppress the occurrence of defects inside the welded first workpiece 10 and second workpiece 12.

In the setting of the energization profile, for example, the pressurization start time point and others may be set depending on the parameters regarding the workpieces described above or the parameters regarding the heating element 14.

After setting the energization profile, the control device 30 causes the power supply device 22 to start applying a voltage to start energization when a condition to start welding is satisfied (S12). The condition to start welding may be, for example, reception of input instructing start of welding or arrival of a set energization start time point.

When determining that a predetermined time from the energization start time point to the set pressurization start time point has elapsed, the control device 30 causes the pressurizing device 24 to start pressurization (S13).

When determining that the pressurization time from the pressurization start time point has passed the set predetermined time, the control device 30 causes the power supply device 22 to end applying the voltage to end energization (S14).

At the end of the energization, the control device 30 causes the pressurizing device 24 to end the pressurization (S15). As a result, welding between the first workpiece 10 and the second workpiece 12 is completed.

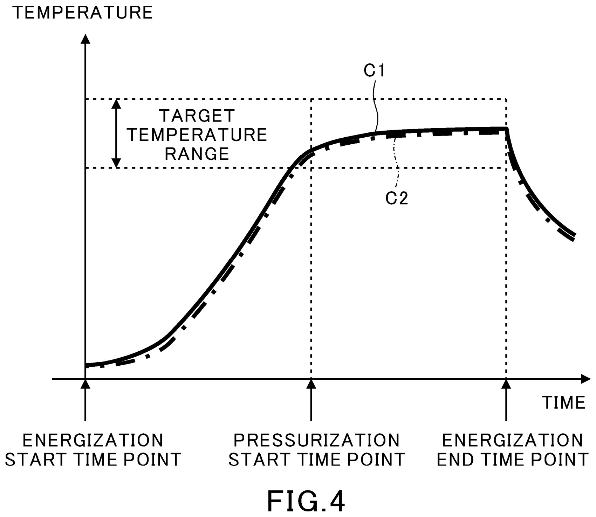

Fig. 4 is a graph illustrating an example of transition of the temperature of the heating element 14 when welding is performed by the welding device 1 according to the first embodiment. A solid line C1 in Fig. 4 indicates an example of transition of the temperature of the first energized region in the heating element 14. An alternate long and short dash line C2 in Fig. 4 illustrates an example of transition of the temperature of the second energized region in the heating element 14.

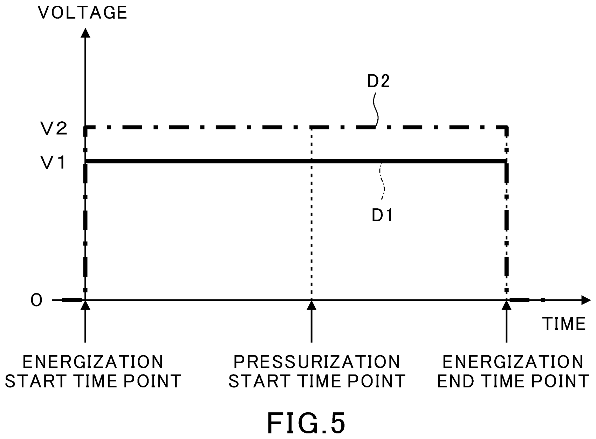

Fig. 5 is a graph illustrating an example of transition of the voltage applied to an electrode 20 in the welding device 1 of the first embodiment. A solid line D1 in Fig. 5 indicates an example of transition of the first voltage applied between the first positive electrode 20a1 and the first negative electrode 20b1. An alternate long and short dash line D2 in Fig. 5 indicates an example of transition of the second voltage applied between the second positive electrode 20a2 and the second negative electrode 20b2.

First, the first voltage and the first energized region will be described. As illustrated in Fig. 5, when the first voltage of the first electrodes is increased from "0" to a predetermined voltage" V1" that has been set in advance, energization of the first energized region is started, and as illustrated in Fig. 4, the temperature of the first energized region starts to increase. When a predetermined time elapses from the energization start time point, the temperature of the first energized region reaches the target temperature range.

The pressurization start time point based on the energization start time point is set to a time point at which pressurization is started after the temperature of the first energized region reaches the target temperature range. At the pressurization start time point, pressurization by the pressurizing device 24 is started, and the temperature of the first energized region is maintained within the target temperature range while pressurization is being performed. When the time required for welding elapses from the pressurization start time point, the first voltage is returned from "V1" to"0", and energization of the first energized region is ended. After the energization end time point, the temperature of the first energized region decreases due to natural heat dissipation or the like.

"V1" as the first voltage is set to a voltage that allows the temperature of the first energized region to be maintained within the target temperature range during the pressurization.

Next, the second voltage and the second energized region will be described. As illustrated in Fig. 5, at the energization start time point, the second voltage of the second electrodes is increased from "0" to a predetermined voltage" V2" which has been set in advance in synchronization with an increase in the first voltage. "V2" as the second voltage is set to a voltage that allows the temperature of the second energized region to be maintained within the target temperature range during the pressurization.

Here, it is based on the premise that the distribution of the resistance value of the heating element 14 is partially non-uniform due to, for example, variations in the fiber content distribution of the fiber-reinforced resin included in the heating element 14. In this example, if a uniform potential is applied in the width direction of the heating element 14, the temperature distribution in the heating element 14 may change in the width direction of the heating element 14. In this case, the temperature of a part of the heating element 14 in the width direction may not fall within the target temperature range.

In the example of Fig. 5, for example, it is based on the premise that the resistance value of the second energized region in the heating element 14 is relatively higher than the resistance value of the first energized region. That is, it is based on the premise that current is relatively less likely to flow in the second energized region than in the first energized region.

In this case, as illustrated in Fig. 5, the predetermined voltage "V2" as the second voltage for applying current to the second energized region is set to a value higher than the predetermined voltage "V1" as the first voltage in consideration of the fact that current is less likely to flow in the second energized region than in the first energized region. As a result, even if the resistance value of the second energized region is higher than the resistance value of the first energized region, the temperature of the second energized region can be maintained within the target temperature range during the pressurization.

By applying such a voltage "V2" to the second electrode, as illustrated in Fig. 4, the transition of the temperature of the second energized region can be made substantially the same as the transition of the temperature of the first energized region.

That is, the control device 30 causes the power supply device 22 to individually apply a voltage to electrodes 20 of each system such that the temperatures of the plurality of energized regions in the heating element 14 are substantially uniform.

As a result, in the welding device 1, even if the distribution of the resistance value of the heating element 14 is non-uniform, the temperature distribution of the heating element 14 at the time of welding can be made uniform. As a result, in the welding device 1, it is possible to suppress deterioration in the quality of welding.

Note that an example has been described here in which the voltage of each system is controlled such that the temperatures of the plurality of energized regions are substantially uniform. However, the temperature control by the control device 30 is not limited to this example. For example, in a case where required temperature conditions are different between the first energized region and the second energized region, the temperatures of the respective energized regions may be made different by controlling the temperatures of the respective energized regions in accordance with the required temperature conditions.

Furthermore, here, the welding in the first energized region and the welding in the second energized region are performed substantially simultaneously by setting the timing of applying a voltage to each of the electrodes 20 in the first energized region and the second energized region to be substantially the same. However, the timing of applying the voltage to the electrodes 20 corresponding to the first energized region and the timing of applying the voltage to the electrodes 20 corresponding to the second energized region may be differentiated from each other. Therefore, for example, welding in the second energized region may be performed after welding in the first energized region has been performed, or welding in the first energized region may be performed after welding in the second energized region has been performed. That is, welding in the first energized region and welding in the second energized region may be performed independently. In this aspect, for example, mutual influence between the first energized region and the second energized region can be suppressed, such as a case where the temperature of the second energized region deviates from a target temperature due to the heat of the first energized region transmitted to the second energized region.

As described above, in the welding device 1 of the first embodiment, the heating element 14 is formed of the fiber-reinforced resin in which the fibers are arranged in one direction. In the welding device 1 of the first embodiment, the plurality of systems of electrodes 20 is provided that divides the energized region of the heating element 14 in the direction intersecting the extending direction.

As a result, in the welding device 1 of the first embodiment, as compared with an aspect in which one energized region is formed over the entire region in the width direction of the heating element 14, the width of a divided energized region in the width direction is narrowed. Therefore, in the welding device 1 of the first embodiment, the influence of the distribution of the resistance value per energized region is reduced.

Furthermore, since the plurality of systems of electrodes 20 is provided in the welding device 1 of the first embodiment, a voltage can be applied to each of the energized regions. Therefore, in the welding device 1 of the first embodiment, the temperature can be controlled for each energized region, and the temperature distribution in the heating element 14 can be finely controlled.

Therefore, according to the welding device 1 of the first embodiment, even in a case where there is a portion where the distribution of the resistance value is non-uniform in the heating element 14, it is possible to suppress deterioration in the quality of welding.

### Second Embodiment

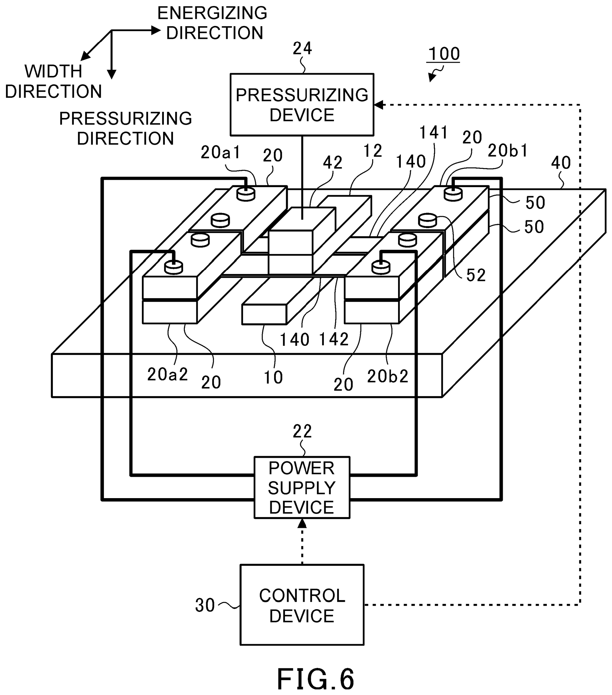

Fig. 6 is a schematic diagram illustrating an example of the configuration of a welding device 100 according to a second embodiment. The welding device 100 of the second embodiment is different from that of the first embodiment in that a first heating element 141 and a second heating element 142 are provided instead of the heating element 14, and other components are similar to those of the first embodiment. Therefore, in the second embodiment, points different from the first embodiment will be described, and description of points common to the first embodiment will be omitted for convenience. Hereinafter, the first heating element 141 and the second heating element 142 may be collectively referred to as the heating elements 140.

In the first embodiment, there is a plurality of divided energized regions in one heating element 14. Meanwhile, in the second embodiment, the energized region is divided with a plurality of heating elements 140 provided.

The heating elements 140 of the second embodiment are made of, for example, a fiber-reinforced resin such as a carbon fiber-reinforced resin (CFRP). However, the heating elements 140 of the second embodiment are not limited to a fiber-reinforced resin in which fibers are arranged in one direction, and may be, for example, a fiber-reinforced resin in which fibers are interwoven in a plurality of directions. In addition, the heating elements 140 of the second embodiment are not limited to fiber-reinforced resins, and may be made of any energizable resin, any metal, any energizable composite material, or the like.

The heating elements 140 of the second embodiment correspond to the heating element 14 of the first embodiment divided into two parts in the width direction. That is, the width dimension of a heating element 140 is about half the width dimension of the heating element 14. The first heating element 141 and the second heating element 142 have substantially the same dimensions and shape.

A first positive electrode 20a1 is attached to a first end, in the extending direction, of the first heating element 141. A first negative electrode 20b1 is attached to a second end, in the extending direction, of the first heating element 141.

A second positive electrode 20a2 is attached to a first end, in the extending direction, of the second heating element 142. A second negative electrode 20b2 is attached to a second end, in the extending direction, of the second heating element 142.

In this manner, the first heating element 141 and the second heating element 142 are arranged side by side in the width direction of the heating elements 140 and are arranged between a first workpiece 10 and a second workpiece 12.

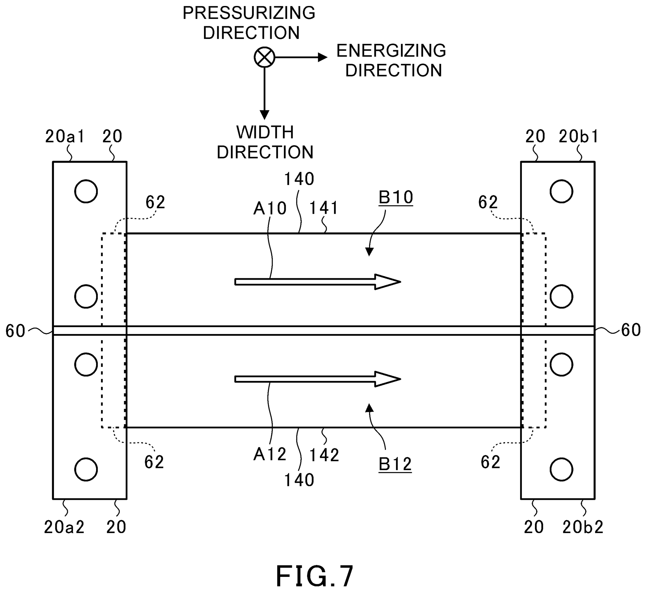

Fig. 7 is a plan view for explaining current flowing through the heating elements 140 in the second embodiment. A hollow arrow A10 and a hollow arrow A12 in Fig. 7 each indicate a direction in which current flows.

As indicated by the hollow arrow A10, a current corresponding to a first voltage applied between the first positive electrode 20a1 and the first negative electrode 20b1 flows through the first heating element 141. As indicated by a region B10, in the first heating element 141, a first energized region is formed over the entire first heating element 141.

As indicated by the hollow arrow A12, a current corresponding to a second voltage applied between the second positive electrode 20a2 and the second negative electrode 20b2 flows through the second heating element 142. As indicated by a region B12, in the second heating element 142, a second energized region is formed over the entire second heating element 142.

As described above, in the welding device 100 of the second embodiment, the plurality of heating elements of the first heating element 141 and the second heating element 142 is provided in the width direction of the heating elements 140, and thus the energized region in which current flows in the heating elements 140 is divided in the width direction of the heating elements 140. In the example of Fig. 7, the energized region is divided into two parts of the first energized region and the second energized region in the width direction of the heating elements 140.

As a result, in the welding device 100, the temperature distribution in the heating elements 140 can be controlled depending on the first voltage and the second voltage.

As illustrated in Fig. 7, the first heating element 141 and the second heating element 142 are separated from each other in the width direction, and there is a predetermined gap between the first heating element 141 and the second heating element 142. That is, adjacent heating elements 140 among a plurality of heating elements 140 are insulated from each other by air, which is an insulator. Incidentally, for example, a solid insulator having an insulating property may be interposed in the gap between the adjacent heating elements 140. In addition, an insulating member 60 which is a sheet-like insulator having an insulating property is disposed between the first positive electrode 20a1 and the second positive electrode 20a2 and between the first negative electrode 20b1 and the second negative electrode 20b2. That is, electric conduction between the adjacent heating elements 140 among the plurality of heating elements 140 is insulated by the insulating member 60 that is an insulator.

Therefore, in the welding device 100, the first heating element 141 and the second heating element 142 can be prevented from being electrically short-circuited. As a result, in the welding device 100, the first energized region of the first heating element 141 and the second energized region of the second heating element 142 can be appropriately divided.

In addition, similarly to the first embodiment, a conduction support material 62 that supports electrical conduction between an electrode 20 and a heating element 140 is applied to a position where the electrode 20 is attached in the heating element 140. The conduction support material 62 is, for example, silver paste or plating. The heating elements 140 are attached to the electrodes 20 after the conduction support material 62 is applied to the ends.

In addition, similarly to the first embodiment, in place of the aspect in which the conduction support material 62 is applied to the heating elements 140, at least a part of a resin included in the fiber-reinforced resin may be removed at the positions where the electrodes 20 are attached in the heating elements 140. Furthermore, the electrodes 20 may be attached to the ends of the heating elements 140 in a state where at least a part of the resin included in the fiber-reinforced resin is removed.

In addition, similarly to the first embodiment, the conduction support material 62 may be applied after at least a part of the resin included in the fiber-reinforced resin is removed at the positions where the electrodes 20 are attached in the heating elements 140. Furthermore, the electrodes 20 may be attached to the ends of the heating elements 140 in a state where at least a part of the resin included in the fiber-reinforced resin is removed and where the conduction support material 62 is applied.

In Fig. 7, in the region to be welded, the energized region is divided into two parts by the two heating elements 140 in the width direction of the heating elements 140. However, in the region to be welded, three or more heating elements 140 may be provided to form three or more divided energized regions. In this case, the number of electrodes 20 provided is set such that three or more systems are provided for the same number of heating elements 140, and one system of electrodes 20 is provided for each heating element 140.

In addition, a control device 30 in the welding device 100 of the second embodiment causes a power supply device 22 to individually apply a voltage to electrodes 20 of each of the heating elements 140 such that the temperatures of the plurality of heating elements 140 are substantially uniform.

As a result, in the welding device 100, even if the distribution of the resistance value of the heating elements 140 is non-uniform, the temperature distribution of the heating elements 140 at the time of welding can be made uniform. As a result, in the welding device 100, it is possible to suppress deterioration in the quality of welding.

In the temperature control by the control device 30, for example, in a case where required temperature conditions are different between the first energized region and the second energized region, the temperatures of the respective energized regions may be made different by controlling the temperatures of the respective energized regions in accordance with the required temperature conditions.

Furthermore, here, the welding in the first energized region and the welding in the second energized region are performed substantially simultaneously by setting the timing of applying a voltage to each of the electrodes 20 in the first heating element 141 (in other words, the first energized region) and the second heating element 142 (in other words, the second energized region) to be substantially the same. However, the timing of applying a voltage to the electrodes 20 of the first heating element 141 and the timing of applying a voltage to the electrodes 20 of the second heating element 142 may be differentiated from each other. Therefore, for example, welding in the second energized region may be performed after welding in the first energized region has been performed, or welding in the first energized region may be performed after welding in the second energized region has been performed. That is, welding in the first energized region and welding in the second energized region may be performed independently. In this aspect, for example, mutual influence between the first energized region and the second energized region can be suppressed, such as a case where the temperature of the second energized region deviates from a target temperature due to the heat of the first energized region transmitted to the second energized region.

As described above, in the welding device 100 of the second embodiment, the plurality of heating elements 140 is arranged apart from each other. In the welding device 100 of the second embodiment, electrodes 20 are individually attached to the plurality of heating elements 140. That is, in the welding device 100 of the second embodiment, a plurality of energized regions as many as the plurality of heating elements 140 is formed.

As a result, in the welding device 100 of the second embodiment, as compared with the aspect in which one energized region is formed over the entire region in the width direction of the region to be welded, the width of a divided energized region in the width direction is narrowed in the region to be welded. Therefore, in the welding device 100 of the second embodiment, the influence of the distribution of the resistance value per energized region is reduced.

Furthermore, in the welding device 100 of the second embodiment, since the plurality of systems of electrodes 20 is provided, a voltage can be applied for each heating element 140, namely, for each energized region. Therefore, in the welding device 100 of the second embodiment, the temperature can be controlled for each energized region, and the temperature distribution of the heating element 140 in the region to be welded can be finely controlled.

Therefore, according to the welding device 100 of the second embodiment, it is possible to suppress deterioration in the quality of welding in the region to be welded.

Although the embodiments have been described with reference to the accompanying drawings, it is naturally understood that the present disclosure is not limited to the above embodiments. It is clear that those skilled in the art can conceive various modifications or variations within the scope described in the claims, and it is understood that they are naturally also within the technical scope of the present disclosure.

For example, the features of the first embodiment and the features of the second embodiment may be combined as appropriate.

### Reference Signs List

1, 100: Welding device, 10:First workpiece, 12:Second workpiece, 14, 140:Heating element, 20:Electrode, 22:Power supply device, 24:Pressurizing device

## Claims

1. A welding device comprising:
a heating element made of a fiber-reinforced resin in which fibers are arranged in one direction, the heating element disposed between a first workpiece and a second workpiece;
a plurality of systems of electrodes attached to the heating element, the plurality of systems of electrodes dividing an energized region of the heating element in a direction intersecting an extending direction of the fibers;
a power supply device that applies current in the extending direction in the heating element by applying a voltage to the electrodes; and
a pressurizing device that welds the first workpiece and the second workpiece via the heating element by applying a pressure to at least one of the first workpiece or the second workpiece in a direction in which the first workpiece and the second workpiece approach each other in a state where the heating element has generated heat with the current flowing through the heating element.

2. The welding device according to claim 1, wherein electrodes of adjacent systems among the plurality of systems of electrodes are insulated from each other by an insulator.

3. The welding device according to claim 1, wherein a conduction support material that supports electrical conduction between an electrode and the heating element is applied to a position where the electrode is attached in the heating element.

4. The welding device according to claim 1, wherein an electrode is attached to the heating element in a state where at least a part of a resin included in the fiber-reinforced resin is removed at a position where the electrode is attached in the heating element.

5. The welding device according to any one of claims 1 to 4, further comprising:
a control device that controls the power supply device and the pressurizing device, wherein
the control device causes the power supply device to individually apply a voltage to electrodes of each of the systems such that a temperature of the energized region in the heating element is substantially uniform in a plurality of the energized regions.

6. A welding device comprising:
a plurality of heating elements arranged apart from each other between a first workpiece and a second workpiece;
electrodes individually attached to the plurality of heating elements;
a power supply device that applies current to the heating elements by applying a voltage to the electrodes; and
a pressurizing device that welds the first workpiece and the second workpiece via the heating elements by applying a pressure to at least one of the first workpiece or the second workpiece in a direction in which the first workpiece and the second workpiece approach each other in a state where the heating elements have generated heat with the current flowing through the heating elements.

7. The welding device according to claim 6, wherein adjacent heating elements among the plurality of heating elements are insulated from each other by an insulator.

8. The welding device according to claim 6 or 7, further comprising:
a control device that controls the power supply device and the pressurizing device, wherein
the control device causes the power supply device to individually apply a voltage to electrodes of each of the heating elements such that temperatures of the plurality of heating elements are substantially uniform.
